# EUROPÄISCHE PATENTSCHRIFT

(11) **EP 4 112 778 B1**
(45) Veröffentlichungstag und Bekanntmachung des Hinweises auf die Patenterteilung: **13.12.2023**
(21) Anmeldenummer: 21182467.7
(22) Anmeldetag: 29.06.2021
(51) Int. Cl.: C25B 3/07, C25B 3/20, C25B 9/13, C25B 9/21, C25B 13/07, B01D 61/42

(54) **DREIKAMMERELEKTROLYSEZELLE ZUR HERSTELLUNG VON ALKALIMETALLALKOHOLATEN**
THREE-CHAMBER ELECTROLYSIS CELL FOR THE PRODUCTION OF ALKALI METAL ALCOHOLATE
CELLULE D'ÉLECTROLYSE À TROIS CHAMBRE DESTINÉE À LA PRODUCTION D'ALCOOLATES ALCALIMÉTAUX

(43) Veröffentlichungstag der Anmeldung: 04.01.2023
(73) Patentinhaber: Evonik Operations GmbH, 45128 Essen (DE); Ruhr-Universität Bochum, 44801 Bochum (DE)
(72) Erfinder: Schumann, Wolfgang, 44799 Bochum (DE); Neumann, Manfred, 45770 Marl (DE); Horn, Michael, 53859 Niederkassel (DE); Reinsberg, Philip Heinrich, 53227 Bonn (DE); Gärtner, Felix, 45721 Haltern am See (DE); Malter, Jutta, 64295 Darmstadt (DE); Stenner, Patrik, 63452 Hanau (DE)
(74) Vertreter: Evonik Patent Association

(56) Entgegenhaltungen:
- EP-A1- 3 885 470
- EP-A1- 3 885 471
- JP-A- 2016 168 542
- JP-A- 2018 030 045
- US-A- 5 425 856
- US-A- 5 575 901
- US-A1- 2007 138 020
- US-A1- 2008 142 373
- US-A1- 2008 173 540
- US-A1- 2010 044 242
- US-A1- 2012 085 657
- US-A1- 2019 292 668

## Beschreibung

Die vorliegende Erfindung betrifft in einem ersten Aspekt eine Elektrolysezelle, welche drei Kammern aufweist, wobei die mittlere Kammer durch einen für Kationen durchlässigen Festelektrolyten, beispielsweise NaSICON, von der Kathodenkammer und durch eine Diffusionsbarriere von der Anodenkammer abgetrennt ist. Die Erfindung ist dadurch gekennzeichnet, dass die mittlere Kammer eine zusätzliche Kathode umfasst.

Die erfindungsgemäße Elektrolysezelle löst das Problem, dass sich während der Elektrolyse ein Konzentrationsgradient in der Mittelkammer der Elektrolysezelle bildet, der zu lokal erniedrigten pH-Werten und damit zu einer Schädigung des Festelektrolyten führt. Mithilfe einer zusätzlichen kathodischen Elektrode in der Mittelkammer werden während der Elektrolyse Hydroxidionen generiert, wodurch die Ausbildung eines pH-Gradienten bzw. eines sauren Milieus in der Nähe des Festelektrolyten verhindert wird.

In einem zweiten Aspekt betrifft die vorliegende Erfindung ein Verfahren zur Herstellung einer Alkalimetallalkoholatlösung in der erfindungsgemäßen Elektrolysezelle.

### 1. Hintergrund der Erfindung

Die elektrochemische Herstellung von Alkalimetallalkoholatlösungen ist ein wichtiger industrieller Prozess, der beispielsweise in der DE 103 60 758 A1, der US 2006/0226022 A1 und der WO 2005/059205 A1 beschrieben ist. Das Prinzip dieser Verfahren spiegelt sich in einer Elektrolysezelle wider, in deren Anodenkammer sich die Lösung eines Alkalisalzes, beispielsweise Kochsalz oder NaOH, und in deren Kathodenkammer sich der betreffende Alkohol oder eine niedrig konzentrierte alkoholische Lösung des betreffenden Alkalialkoholats, beispielsweise Natriummethanolat oder Natriumethanolat, befinden. Die Kathodenkammer und die Anodenkammer sind durch eine das eingesetzte Alkalimetallion leitende Keramik getrennt, beispielsweise NaSICON oder ein Analogon für Kalium oder Lithium. Bei Anlegen eines Stroms entstehen an der Anode - wenn ein Chloridsalz des Alkalimetalls eingesetzt wird - Chlor und an der Kathode Wasserstoff und Alkoholationen. Der Ladungsausgleich erfolgt dadurch, dass Alkalimetallionen aus der Mittelkammer in die Kathodenkammer über die für sie selektive Keramik wandern. Der Ladungsausgleich zwischen Mittelkammer und Anodenkammer erfolgt durch die Wanderung von Kationen bei Einsatz von Kationenaustauschermembranen oder die Wanderung von Anionen bei Einsatz von Anionenaustauschermembranen oder durch Wanderung beider lonenarten bei Einsatz nichtspezifischer Diffusionsbarrieren. Dadurch erhöht sich die Konzentration des Alkalialkoholats in der Kathodenkammer und es erniedrigt sich die Konzentration der Natriumionen im Anolyten.

NaSICON-Festelektrolyte werden auch bei der elektrochemischen Herstellung anderer Verbindungen eingesetzt:
WO 2014/008410 A1 beschreibt ein elektrolytisches Verfahren zur Herstellung von elementarem Titan oder Seltenen Erden. Dieses Verfahren beruht darauf, dass Titanchlorid aus TiO₂ und der entsprechenden Säure gebildet wird, dieses mit Natriumalkoholat zum Titaniumalkoholat und NaCl reagiert und schließlich elektrolytisch zu elementarem Titan und Natriumalkoholat umgesetzt wird.

WO 2007/082092 A2 und WO 2009/059315 A1 beschreiben Verfahren zur Herstellung von Biodiesel, in denen mithilfe von über NaSICON elektrolytisch hergestellten Alkoholaten zunächst Triglyceride in die entsprechenden Alkalimetalltriglyceride überführt werden und in einem zweiten Schritt mit elektrolytisch erzeugten Protonen zu Glycerin und dem jeweiligen Alkalimetallhydroxid umgesetzt werden.

Im Stand der Technik sind demnach Verfahren beschrieben, die in Elektrolysezellen mit einer ionendurchlässigen Schicht durchgeführt werden, wie zum Beispiel NaSiCON-Festelektrolyten. Diese Festelektrolyten weisen allerdings typischerweise den Nachteil auf, dass sie nicht gegenüber wässrigen Säuren langzeitstabil sind. Dies ist insofern problematisch, als während der Elektrolyse in der Anodenkammer der pH durch Oxidationsprozesse sinkt (zum Beispiel bei Herstellung von Halogenen durch Disproportionierung oder durch Sauerstoffbildung). Diese sauren Bedingungen greifen den NaSICON-Festelektrolyten an, so dass das Verfahren nicht großtechnisch eingesetzt werden kann. Um diesem Problem zu begegnen, wurden im Stand der Technik verschiedene Ansätze beschrieben.

So wurden im Stand der Technik Dreikammerzellen vorgeschlagen. Solche sind auf dem Gebiet der Elektrodialyse bekannt, zum Beispiel US 6,221,225 B1.

WO 2012/048032 A2 und US 2010/0044242 A1 beschreiben beispielsweise elektrochemische Verfahren zur Herstellung von Natriumhypochlorit und ähnlicher Chlorverbindungen in einer solchen Dreikammerzelle. Die Kathodenkammer und die mittlere Kammer der Zelle werden dabei durch einen für Kationen durchlässigen Festelektrolyten wie zum Beispiel NaSICON getrennt. Um diesen vor dem sauren Anolyten zu schützen, wird der Mittelkammer beispielsweise Lösung aus der Kathodenkammer zugeführt. Die US 2010/0044242 A1 beschreibt außerdem in Abbildung 6, dass Lösung aus der mittleren Kammer mit Lösung aus der Anodenkammer außerhalb der Kammer vermischt werden kann, um Natriumhypochlorit zu erhalten.

Auch für die Herstellung oder Reinigung von Alkalialkoholaten wurden solche Zellen im Stand der Technik vorgeschlagen.

So beschreibt die US 5,389,211 A ein Verfahren zur Reinigung von Alkoholatlösungen, in denen eine Dreikammerzelle eingesetzt wird, in welcher die Kammern durch kationenselektive Festelektrolyten oder auch nichtionische Trennwände voneinander abgegrenzt sind. Die Mittelkammer wird als Pufferkammer eingesetzt, um zu verhindern, dass sich die gereinigte Alkoxid- oder Hydroxidlösung aus der Kathodenkammer mit der verunreinigten Lösung aus der Anodenkammer mischt.

Die DE 42 33 191 A1 beschreibt die elektrolytische Gewinnung von Alkoholaten aus Salzen und Alkoholaten in Mehrkammerzellen und Stapeln aus mehreren Zellen.

Die WO 2008/076327 A1 beschreibt ein Verfahren zur Herstellung von Alkalimetallalkoholaten. Dabei wird eine Dreikammerzelle eingesetzt, deren Mittelkammer mit Akalimetallalkoholat gefüllt ist (siehe zum Beispiel Absätze [0008] und [0067] der WO 2008/076327 A1). Dadurch wird der die Mittelkammer und die Kathodenkammer abtrennende Festelektrolyt vor der in der Anodenkammer befindlichen Lösung, die bei der Elektrolyse saurer wird, geschützt. Eine ähnliche Anordnung beschreibt die WO 2009/073062 A1. Diese Anordnung hat allerdings den Nachteil, dass es sich bei Alkalimetallalkoholatlösung um das gewünschte Produkt handelt, was aber als Pufferlösung verbraucht und kontinuierlich kontaminiert wird. Ein weiterer Nachteil des in der WO 2008/076327 A1 beschriebenen Verfahrens ist, dass die Bildung des Alkoholats in der Kathodenkammer von der Diffusionsgeschwindigkeit der Alkalimetallionen durch zwei Membranen bzw. Festelektrolyten abhängt. Dies führt wiederum zu einer Verlangsamung der Bildung des Alkoholats.

Die beiden nachveröffentlichten Anmeldungen EP3885470A1 und EP3885471A1 offenbaren jeweils eine Dreikammerzelle mit einer Verbindung zwischen Anodenkammer und Mittelkammer.

Ein weiteres Problem ergibt sich durch die Geometrie der Dreikammerzelle. Die Mittelkammer ist in einer solchen Kammer durch eine Diffusionsbarriere von der Anodenkammer und durch eine ionenleitende Keramik von der Kathodenkammer abgetrennt. Während der Elektrolyse kommt es damit unvermeidlich zur Ausbildung von pH-Gradienten und zu Totvolumina. Dies kann die ionenleitende Keramik schädigen und infolgedessen den Spannungsbedarf der Elektrolyse erhöhen und/oder zum Bruch der Keramik führen.

Während dieser Effekt in der gesamten Elektrolysekammer stattfindet, ist der Abfall des pH-Werts besonders kritisch in der Mittelkammer, da diese von der ionenleitenden Keramik begrenzt wird. An der Anode und der Kathode werden üblicherweise Gase gebildet, sodass es in diesen Kammern zumindest bis zu einem gewissen Grad zur Durchmischung kommt. Eine solche Durchmischung findet dagegen in der Mittelkammer nicht statt, so dass sich in ihr der pH-Gradient ausbildet. Dieser unerwünschte Effekt verstärkt sich dadurch, dass die Sole im Allgemeinen relativ langsam durch die Elektrolysezelle gepumpt wird.

Aufgabe der vorliegenden Erfindung war es deshalb, ein verbessertes Verfahren zur elektrolytischen Herstellung von Alkalimetallalkoholat wie auch eine insbesondere für ein solches Verfahren geeignete Elektrolysekammer zu Verfügung zu stellen. Diese sollen die vorgenannten Nachteile nicht aufweisen und insbesondere einen verbesserten Schutz des Festelektrolyten vor der Ausbildung des pH-Gradienten sowie einen gegenüber dem Stand der Technik sparsameren Einsatz der Edukte gewährleisten.

US5425856, US5575901, US2007138020, US2019292668, JP2016168542 und JP2018030045 offenbaren weiteren Stand der Technik.

### 2. Kurzbeschreibung der Erfindung

Es wurden nun überraschend eine Elektrolysezelle und ein Verfahren gefunden, welche die erfindungsgemäße Aufgabe lösen.

Das Elektrolysezelle **E** <100> gemäß dem ersten Aspekt der Erfindung umfasst mindestens eine Anodenkammer **K_{A}** <101 >, mindestens eine Kathodenkammer **K_{K}** <102> und mindestens eine dazwischen liegende Mittelkammer **K_{M}** <103>,
wobei **K_{A}** <101 > eine anodische Elektrode **E_{A}** <104> und einen Ablauf **A_{KA}** <106> umfasst,
wobei **K_{K}** <102> eine kathodische Elektrode **E_{K}** <105>, einen Zulauf **Z_{KK}** <107> und einen Ablauf **A_{KK}** <109> umfasst,
wobei **K_{M}** <103> einen Zulauf **Z_{KM}** <108> umfasst, durch eine Diffusionsbarriere **D** <110> von **K_{A}** <101 > abgetrennt ist und durch einen alkalikationenleitenden Festelektrolyten **F_{K}** <111 > von **K_{K}** <102> abgetrennt ist,
wobei **K_{M}** <103> und **K_{A}** <101 > durch eine Verbindung **V_{AM}** <112> miteinander verbunden sind, durch welche Flüssigkeit aus **K_{M}** <103> in **K_{A}** <101 > geleitet werden kann,
und ist dadurch gekennzeichnet, dass die Mittelkammer **K_{M}** <103> eine kathodische Elektrode **E_{M}** <120> umfasst.

In einem zweiten Aspekt betrifft die vorliegende Erfindung ein Verfahren zur Herstellung einer Lösung **L₁** <115> eines Alkalimetallalkoholats XOR im Alkohol ROH in einer Elektrolysezelle E <100> gemäß dem ersten Aspekt der Erfindung,
wobei das Verfahren die folgenden, gleichzeitig ablaufenden Schritte (a), (b) und (c) umfasst:
   (a) ein Lösung **L₂** <113> umfassend den Alkohol ROH wird durch **K_{K}** <102> geleitet,
   (b) eine neutrale oder alkalische, wässrige Lösung **L₃** <114> eines Salzes **S** umfassend X als Kation wird durch **K_{M},** dann über **V_{AM},** dann durch **K_{A}** <101 > geleitet,
   (c) zwischen **E_{A}** <104> und den beiden kathodischen Elektroden **E_{K}** <105> und **E_{M}** <120> wird Spannung angelegt,
wodurch am Ablauf **A_{KK}** <109> die Lösung **L₁** <115> erhalten wird, wobei die Konzentration von XOR in **L₁** <115> höher ist als in **L₂** <113>,
und wodurch am Ablauf **A_{KA}** <106> eine wässrige Lösung **L₄** <116> von **S** erhalten wird, wobei die Konzentration von **S** in **L₄** <116> geringer ist als in **L₃** <114>,
und wodurch an der kathodischen Elektrode **E_{M}** <120> im Elektrolyten **L₃** <114> in der Mittelkammer **K_{M}** <103> Hydroxidionen gebildet werden,
wobei X ein Alkalimetallkation ist und Rein Alkylrest mit 1 bis 4 Kohlenstoffatomen ist.

### 3. Abbildungen

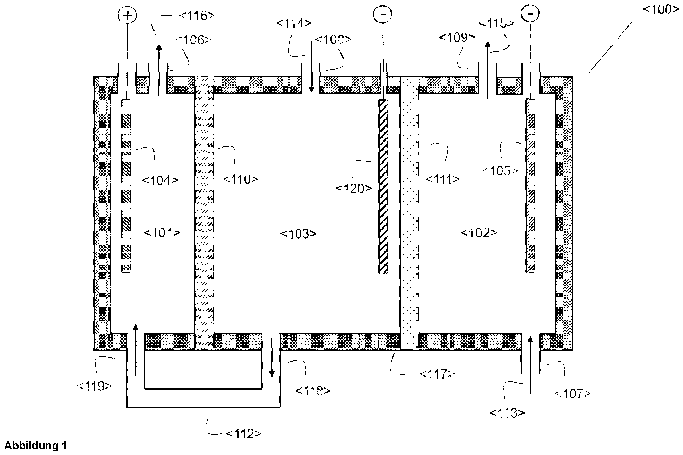

Abbildung 1 zeigt eine bevorzugte Ausführungsform einer erfindungsgemäßen Elektrolysezelle <100> und des erfindungsgemäßen Verfahrens. Die Dreikammerzelle **E** <100> umfasst eine Kathodenkammer **K_{K}** <102>, eine Anodenkammer **K_{A}** <101 > und eine dazwischen liegende Mittelkammer **K_{M}** <103>.

Die Kathodenkammer **K_{K}** <102> umfasst eine kathodische Elektrode **E_{K}** <105>, einen Zulauf **Z_{KK}** <107> und einen Ablauf **A_{KK}** <109>.

Die Anodenkammer **K_{A}** <101 > umfasst eine anodische Elektrode **E_{A}** <104> und einen Ablauf **A_{KA}** <106> und ist mit der Mittelkammer **K_{M}** <103> über die Verbindung **V_{AM}** <112> verbunden.

Die Mittelkammer **K_{M}** <103> umfasst einen Zulauf **Z_{KM}** <108> und eine kathodische Elektrode **E_{M}** <120>.

Die drei Kammern werden von einer Außenwand <117> der Dreikammerzelle **E** <100> begrenzt. Die Kathodenkammer **K_{K}** <102> ist außerdem durch einen für Natriumionen selektiv permeablen NaSICON-Festelektrolyten **F_{K}** <111 > von der Mittelkammer **K_{M}** <103> abgetrennt. Die Mittelkammer **K_{M}** <103> ist zusätzlich wiederum durch eine Diffusionsbarriere **D** <110> von der Anodenkammer **K_{A}** <101 > abgetrennt. Der NaSICON-Festelektrolyt **F_{K}** <111 > und die Diffusionsbarriere **D** <110> erstrecken sich über die gesamte Tiefe und Höhe der Dreikammerzelle **E** <100>. Die Diffusionsbarriere **D** <110> ist aus Glas.

In der Ausführungsform gemäß Abbildung 1 wird die Verbindung **V_{AM}** <112> außerhalb der Elektrolysezelle **E** <100> ausgebildet, insbesondere durch ein Rohr oder Schlauch, dessen Material aus Gummi, Metall oder Kunststoff ausgewählt sein kann. Durch die Verbindung **V_{AM}** <112> kann Flüssigkeit aus der Mittelkammer **K_{M}** <103> in die Anodenkammer **K_{A}** <101> außerhalb der Außenwand **W_{A}** <117> der Dreikammerzelle **E** <100> geleitet werden. Die Verbindung **V_{AM}** <112> verbindet einen Ablauf **A_{KM}** <118>, der am Boden der Mittelkammer **K_{M}** <103> die Außenwand **W_{A}** <117> der Elektrolysezelle **E** <100> durchbricht, mit einem Zulauf **Z_{KA}** <119>, der am Boden der Anodenkammer **K_{A}** <101 > die Außenwand **W_{A}** <117> der Elektrolysezelle **E** <100> durchbricht.

Eine wässrige Lösung von Natriumchlorid **L₃** <114> mit pH 10.5 wird über den Zulauf **Z_{KM}** <108> gleichgerichtet mit der Schwerkraft in die Mittelkammer **K_{M}** <103> gegeben. Durch die Verbindung **V_{AM}** <112>, die zwischen einem Ablauf **A_{KM}** <118> der Mittelkammer **K_{M}** <103> und einem Zulauf **Z_{KA}** <119> der Anodenkammer **K_{A}** <101 > ausgebildet ist, ist die Mittelkammer **K_{M}** <103> mit der Anodenkammer **K_{A}** <101 > verbunden. Natriumchloridlösung **L₃** <114> wird durch diese Verbindung **V_{AM}** <112> von der Mittelkammer **K_{M}** <103> in die Anodenkammer **K_{A}** <101 > geleitet. Über den Zulauf **Z_{KK}** <107> wird eine Lösung von Natriummethanolat in Methanol **L₂** <113> in die Kathodenkammer **K_{K}** <102> geleitet.

Es wird dabei eine Spannung zwischen der kathodischen Elektrode **E_{K}** <105> und der anodischen Elektrode **E_{A}** <104> angelegt. Dadurch wird in der Kathodenkammer **K_{K}** <102> Methanol im Elektrolyten **L₂** <113> zu Methanolat und H₂ reduziert (CHsOH + e⁻ → CH₃O- + ½ H₂). Natriumionen diffundieren dabei von der Mittelkammer **K_{M}** <103> durch den NaSICON-Festelektrolyten **F_{K}** <111 > in die Kathodenkammer **K_{K}** <102>. Insgesamt erhöht sich dadurch die Konzentration von Natriummethanolat in der Kathodenkammer **K_{K}** <102>, wodurch eine methanolische Lösung von Natriummethanolat **L₁** <115> erhalten wird, deren Konzentration an Natriummethanolat gegenüber **L₂** <113> erhöht ist.

In der Anodenkammer **K_{A}** <101 > findet die Oxidation von Chloridionen zu molekularem Chlor statt (Cl⁻ → ½ Cl₂ + e). Am Ablauf **A_{KA}** <106> wird eine wässrige Lösung **L₄** <116> erhalten, in der der Gehalt an NaCl gegenüber **L₃** <114> verringert ist. Chlorgas Cl₂ bildet in Wasser gemäß der Reaktion Cl₂ + H₂O → HOCl + HCl hypochlorige Säure und Salzsäure, welche mit weiteren Wassermolekülen sauer reagieren. Die Acidität schädigt den NaSICON-Festelektrolyten <111 >, wird aber durch die erfindungsgemäße Anordnung in der Anodenkammer **K_{A}** <101 > begrenzt und somit in der Elektrolysezelle **E** <100> vom NaSICON-Festelektrolyten **F_{K}** <111> ferngehalten. Dadurch erhöht sich dessen Lebensdauer beträchtlich.

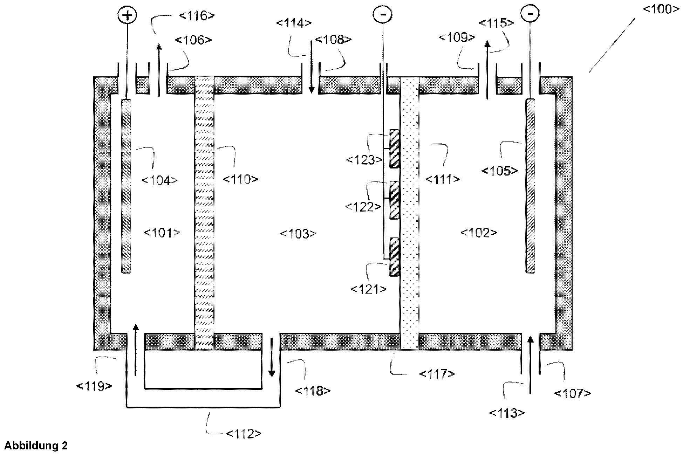

In der Mittelkammer **K_{M}** <103> befindet sich außerdem die kathodische Elektrode **E_{M}.** Diese hängt frei in der Mittelkammer **K_{M}** <103>, kann aber auch am NaSICON-Festelektrolyten **F_{K}** <111> befestigt werden (wie in Abbildung 2 gezeigt). In der Mittelkammer **K_{M}** <103> findet die Reduktion von Wasser zu molekularem Wasserstoff unter Bildung von Hydroxidionen OH⁻ statt (H₂O + e⁻ → ½ H₂ + OH⁻ ). Die OH⁻-Ionen in der Lösung **L₃** <114> erhöhen den pH-Wert in der unmittelbar am NaSICON-Festelektrolyten <111 > grenzenden Lösung und verhindern so die Ausbildung eines sich mit Fortgang der Elektrolyse in der Mittelkammer **K_{M}** <103> aufbauenden pH-Gradienten. Durch das Verfahren wird ein Absinken des pH-Wertes an der Oberfläche des NaSICON-Festelektrolyten <111> verhindert und das System kann langzeitstabil betrieben werden. Dadurch wird die Haltbarkeit des NaSICON-Festelektrolyten <111 > weiter erhöht.

Abbildung 2 zeigt eine weitere Ausführungsform der erfindungsgemäßen Elektrolysezelle und des erfindungsgemäßen Verfahrens, die der in Abbildung 1 dargestellten entspricht. Der Unterschied ist dabei, dass die kathodische Elektrode **E_{M}** <120> direkt auf dem Festelektrolyten **F_{K}** <111> angebracht ist und diesen somit kontaktiert. Die kathodische Elektrode **E_{M}** <120> ist in mehreren Abschnitten <121 >, <122> und <123> auf dem Festelektrolyten **F_{K}** <111> angebracht. Dies verbessert den Stabilisierungseffekt noch weiter, da dadurch das Absinken des pH-Wertes in unmittelbarer Umgebung, d.h. an der Oberfläche des Festelektrolyten **F_{K}** <111 >, verhindert wird.

### 4. Detaillierte Beschreibung der Erfindung

### 4.1 Elektrolysezelle E

Der erste Aspekt der Erfindung betrifft eine Elektrolysezelle **E** <100>. Die Elektrolysezelle **E** <100> gemäß dem ersten Aspekt der Erfindung umfasst mindestens eine Anodenkammer **K_{A}** <101 >, mindestens eine Kathodenkammer **K_{K}** <102> und mindestens eine dazwischen liegende Mittelkammer **K_{M}** <103>. Dies umfasst auch Elektrolysezellen **E** <100>, welche mehr als eine Anodenkammer **K_{A}** <101 > und/oder Kathodenkammer **K_{K}** <102> und/oder Mittelkammer **K_{M-}<1** 03> aufweisen. Solche Elektrolysezellen, in denen diese Kammern modulartig aneinandergefügt werden, sind beispielsweise in der DD 258 143 A3 und der US 2006/0226022 A1 beschrieben.

Die Anodenkammer **K_{A}** <101 > umfasst eine anodische Elektrode **E_{A}** <104>. Als solche anodische Elektrode **E_{A}** <104> kommt jede dem Fachmann geläufige Elektrode in Frage, die unter den Bedingungen des erfindungsgemäßen Verfahrens nach dem zweiten Aspekt der Erfindung stabil ist. Solche sind insbesondere in WO 2014/008410 A1, Absatz [024] oder DE 10360758 A1, Absatz [031] beschrieben. Diese Elektrode **E_{A}** <104> kann aus einer Schicht bestehen oder aus mehreren planen, zueinander parallelen Schichten bestehen, die jeweils perforiert oder expandiert sein können. Die anodische Elektrode **E_{A}** <104> umfasst insbesondere ein Material, welches ausgewählt ist aus der Gruppe bestehend aus Rutheniumoxid, Iridiumoxid, Nickel, Kobalt, Nickelwolframat, Nickeltitanat, Edelmetalle wie insbesondere Platin, welches auf einem Träger wie Titan oder Kovar ^{®} (einer Eisen/Nickel/Kobalt-Legierung, in denen die einzelnen Anteile bevorzugt wie folgt sind: 54 Massen-% Eisen, 29 Massen-% Nickel, 17 Massen-% Cobalt) geträgert ist. Weitere mögliche Anodenmaterialien sind insbesondere Edelstahl, Blei, Graphit, Wolframcarbid, Titandiborid. Bevorzugt umfasst die anodische Elektrode **E_{A}** <104> eine mit Rutheniumoxid/ Iridiumoxid beschichtete Titananode (RuO₂ + lrO₂ /Ti).

Die Kathodenkammer **K_{K}** <102> umfasst eine kathodische Elektrode **E_{K}** <105>. Als solche kathodische Elektrode **E_{K}** <105> kommt jede dem Fachmann geläufige Elektrode in Frage, die unter den Bedingungen stabil ist. Solche sind insbesondere in WO 2014/008410 A1, Absatz [025] oder DE 10360758 A1, Absatz [030] beschrieben. Diese Elektrode **E_{K}** <105> kann aus der Gruppe bestehend aus Maschenwolle, dreidimensionale Matrixstruktur oder "Kugeln" ausgewählt sein. Die kathodische Elektrode **E_{K}** <105> umfasst insbesondere ein Material, welches ausgewählt ist aus der Gruppe bestehend aus Stahl, Nickel, Kupfer, Platin, platinierte Metalle, Palladium, auf Kohle geträgertes Palladium, Titan. Bevorzugt umfasst **E_{K}** <105> Nickel.

Die mindestens eine Mittelkammer **K_{M}** <103> befindet sich zwischen der Anodenkammer **K_{A}** <101 > und der Kathodenkammer **K_{K}** <102>.

Die Elektrolysezelle **E** <100> weist üblicherweise eine Außenwand **W_{A}** <117> auf. Die Außenwand **W_{A}** <117> ist insbesondere aus einem Material, welches aus der Gruppe bestehend aus Stahl, bevorzugt gummiertem Stahl, Kunststoff, der insbesondere aus Telene ^{®} (duroplastischem Polydicyclopentadien), PVC (Polyvinylchlorid), PVC-C (nachchloriertes Polyvinylchlorid), PVDF (Polyvinylidenfluorid) ausgewählt ist. **W_{A}** <117> kann insbesondere für Zuläufe und Abläufe durchbrochen sein. Innerhalb von **W_{A}** <117> liegen dann die mindestens eine Anodenkammer **K_{A}** <101>, die mindestens eine Kathodenkammer **K_{K}** <102> und die mindestens eine dazwischen liegende Mittelkammer **K_{M}** <103>.

**K_{M}** <103> ist durch eine Diffusionsbarriere **D** <110> von **K_{A}** <101 > abgetrennt und durch einen alkalikationenleitenden Festelektrolyten **F_{K}** <111 > von **K_{K}** <102> abgetrennt.

Für die Diffusionsbarriere **D** <110> kann jedes Material genutzt werden, welches unter den Bedingungen des erfindungsgemäßen Verfahrens nach dem zweiten Aspekt der Erfindung stabil ist und den Übergang von Protonen von der in der Anodenkammer **K_{A}** <101> befindlichen Flüssigkeit in die Mittelkammer **K_{M}** <103> verhindert oder verlangsamt.

Als Diffusionsbarriere **D** <110> wird insbesondere eine nicht ionenspezifische Trennwand oder eine für spezifische Ionen durchlässige Membran verwendet. Bevorzugt handelt es sich bei der Diffusionsbarriere **D** <110> um eine nicht ionenspezifische Trennwand.

Das Material der nicht ionenspezifischen Trennwand ist insbesondere aus der Gruppe bestehend aus Gewebe, wobei es sich insbesondere um textiles Gewebe oder Metallgewebe handelt, Glas, wobei es sich insbesondere um gesintertes Glas oder Glasfritten handelt, Keramik, insbesondere keramische Fritten, Membrandiaphragmas ausgewählt, und ist besonders bevorzugt Glas.

Handelt es sich bei der Diffusionsbarriere **D** <110> um eine "für spezifische Ionen durchlässige Membran", so bedeutet dies erfindungsgemäß, dass die jeweilige Membran die Diffusion bestimmter Ionen durch sie hindurch gegenüber anderen Ionen begünstigt. Insbesondere sind damit Membranen gemeint, die die Diffusion durch sie hindurch von Ionen einer bestimmten Ladungsart gegenüber entgegengesetzt geladenen Ionen begünstigt. Noch bevorzugter begünstigen für spezifische Ionen durchlässige Membranen außerdem die Diffusion bestimmter Ionen mit einer Ladungsart gegenüber anderen Ionen derselben Ladungsart durch sie hindurch.

Ist die Diffusionsbarriere **D** <110> eine "für spezifische Ionen durchlässige Membran", handelt es sich insbesondere bei der Diffusionsbarriere **D** <110> um eine anionenleitende Membran oder um eine kationenleitende Membran.

Anionenleitende Membranen sind erfindungsgemäß solche, die selektiv Anionen, bevorzugt selektiv bestimmte Anionen leiten. In anderen Worten begünstigen sie die Diffusion von Anionen durch sie hindurch gegenüber der von Kationen, insbesondere gegenüber Protonen, noch bevorzugter begünstigen sie zusätzlich die Diffusion von bestimmten Anionen durch sie hindurch gegenüber der Diffusion anderer Anionen durch sie hindurch.

Kationenleitende Membranen sind erfindungsgemäß solche, die selektiv Kationen, bevorzugt selektiv bestimmte Kationen leiten. In anderen Worten begünstigen sie die Diffusion von Kationen durch sie hindurch gegenüber der von Anionen, noch bevorzugter begünstigen sie zusätzlich die Diffusion von bestimmten Kationen, durch sie hindurch gegenüber der Diffusion anderer Kationen durch sie hindurch, noch viel mehr bevorzugter von Kationen, bei denen es sich nicht um Protonen handelt, noch bevorzugter um Natriumkationen handelt, gegenüber Protonen.

"Begünstigen die Diffusion bestimmter Ionen X gegenüber der Diffusion anderer Ionen Y" bedeutet insbesondere, dass der Diffusionskoeffizient (Einheit m²/s) der lonenart X bei einer gegebenen Temperatur für die betreffende Membran um den Faktor 10, bevorzugt 100, bevorzugt 1000 höher ist als der Diffusionskoeffizient der lonenart Y für die betreffende Membran.

Handelt es sich bei der Diffusionsbarriere **D** <110> um eine "für spezifische Ionen durchlässige Membran", so ist es bevorzugt eine anionenleitende Membran, denn diese verhindert besonders gut die Diffusion von Protonen aus der Anodenkammer **K_{A}** <101 > in die Mittelkammer **K_{M}** <103>.

Als anionenleitende Membran wird insbesondere eine solche eingesetzt, die für die vom Salz S umfassten Anionen selektiv sind. Solche Membranen sind dem Fachmann bekannt und können von ihm eingesetzt werden.

Das Salz **S** ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Bevorzugt wird als anionenleitende Membran eine für Halogenide, bevorzugter Chlorid, selektive Membran eingesetzt.

Anionenleitende Membranen sind beispielsweise von M.A. Hickner, A.M. Herring, E.B. Coughlin, Journal of Polymer Science, Part B: Polymer Physics 2013, 51, 1727-1735, von C.G. Arges, V. Ramani, P.N. Pintauro, Electrochemical Society Interface 2010, 19, 31-35, in WO 2007/048712 A2 sowie auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003) beschrieben.

Noch bevorzugter werden demnach als anionenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, ausgewählt sind, eingesetzt, wobei diese kovalent gebunden funktionelle Gruppen ausgewählt aus -NH₃⁺, - NRH₂⁺, -NR₃⁺, =NR⁺;-PR₃⁺, wobei es sich bei R um Alkylgruppen mit bevorzugt 1 bis 20 Kohlenstoffatomen handelt, oder andere kationische Gruppen aufweisen. Bevorzugt weisen sie kovalent gebundene funktionelle Gruppen, ausgewählt aus -NH₃⁺, -NRH₂⁺, -NR₃⁺, bevorzugter ausgewählt aus -NH₃⁺, -NR₃⁺, noch bevorzugter -NR₃⁺, auf.

Wenn die Diffusionsbarriere **D** <110> eine kationenleitende Membran ist, handelt es sich insbesondere um eine Membran, die für die vom Salz **S** umfassten Kationen selektiv ist. Noch bevorzugter ist die Diffusionsbarriere **D** <110> eine alkalikationenleitende Membran, noch mehr bevorzugter eine kalium- und/oder natriumionenleitende Membran, am bevorzugtesten eine natriumionenleitende Membran.

Kationenleitende Membranen sind beispielsweise beschrieben auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als kationenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, Polyperfluorethylen, ausgewählt sind, eingesetzt, wobei diese kovalent gebunden funktionelle Gruppen ausgewählt aus -SO₃⁻, -COO⁻, -PO₃²⁻, -PO₂H⁻, bevorzugt -SO₃⁻, (beschrieben in DE 10 2010 062 804 A1, US 4,831,146) tragen.

Dies kann zum Beispiel ein sulfoniertes Polyperfluorethylen (Nafion ^{®} mit CAS-Nummer: 31175-20-9) sein. Diese sind dem Fachmann beispielsweise aus der WO 2008/076327 A1, Absatz [058], US 2010/0044242 A1, Absatz [0042] oder der US 2016/ 0204459 A1 bekannt und unter dem Handelsnamen Nafion ^{®}, Aciplex ^{®} F, Flemion ^{®}, Neosepta ^{®}, Ultrex ^{®}, PC-SK ^{®} erwerblich. Neosepta^{®}-Membranen sind beispielsweise beschrieben von S.A. Mareev, D.Yu. Butylskii, N.D. Pismenskaya, C. Larchet, L. Dammak, V.V. Nikonenko, Journal of Membrane Science 2018, 563, 768-776.

Wird eine kationenleitende Membran als Diffusionsbarriere **D** <110> eingesetzt, kann dies beispielsweise ein mit Sulfonsäuregruppen funktionalisiertes Polymer, insbesondere der folgenden Formel **P_{NAFION},** wobei n und m unabhängig voneinander eine ganze Zahl von 1 bis 10⁶, bevorzugter eine ganze Zahl von 10 bis 10⁵, noch bevorzugter eine ganze Zahl von 10² bis 10⁴ ist, sein.

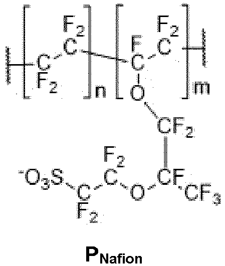

Als alkalikationenleitender Festelektrolyt **F_{K}** <111 > kommt jeder Festelektrolyt in Frage, welcher Kationen, insbesondere Alkalikationen, noch bevorzugter Natriumkationen, von der Mittelkammer **K_{M}** <103> in die Kathodenkammer **K_{K}** <102> transportieren kann. Solche Festelektrolyten sind dem Fachmann bekannt und beispielsweise in der DE 10 2015 013 155 A1, in der WO 2012/048032 A2, Absätze [0035], [0039], [0040], in der US 2010/0044242 A1, Absätze [0040], [0041], in der DE 10360758 A1, Absätze [014] bis [025] beschrieben. Sie werden kommerziell unter dem Namen NaSICON, LiSICON, KSICON vertrieben. Ein natriumionenleitender Festelektrolyt **F_{K}** <111> ist bevorzugt, wobei dieser noch bevorzugter eine NaSICON-Struktur aufweist. Erfindungsgemäß einsetzbare NaSICON-Strukturen sind außerdem beispielsweise beschrieben von N. Anantharamulu, K. Koteswara Rao, G. Rambabu, B. Vijaya Kumar, Velchuri Radha, M. Vithal, J Mater Sei 2011, 46, 2821-2837.

NaSICON hat bevorzugt eine Struktur der Formel M^{I}_{1+2w+x-y+z} M^{II}_{w} M^{III}ₓ Zr^{IV}_{2-w-x-y} M^{V}_{y} (SiO₄)_{z} (PO₄)_{3-z}.

M^{I} ist ausgewählt aus Na⁺, Li⁺, bevorzugt Na⁺.

M" ist ein zweiwertiges Metallkation, bevorzugt ausgewählt aus Mg²⁺, Ca²⁺, Sr²', Ba²⁺, Co²⁺, Ni²⁺, bevorzugter ausgewählt aus Co²⁺, Ni²⁺.

M^{III} ist ein dreiwertiges Metallkation, bevorzugt ausgewählt aus Al³⁺, Ga³⁺, Sc³⁺, La³⁺, Y³⁺, Gd³⁺, Sm³⁺, Lu³⁺, Fe³⁺, Cr³⁺, bevorzugter ausgewählt aus Sc³⁺, La³⁺, Y³⁺, Gd³⁺, Sm³⁺, besonders bevorzugt ausgewählt aus Sc³⁺, Y³⁺, La³⁺.

M^{V} ist ein fünfwertiges Metallkation, bevorzugt ausgewählt aus V⁵⁺, Nb⁵⁺, Ta⁵⁺.

Die römischen Indizes I, II, III, IV, V geben die Oxidationszahlen an, in der die jeweiligen Metallkationen vorliegen.
w, x, y, z sind reelle Zahlen, wobei gilt, dass 0 ≤ x < 2, 0≤ y < 2, 0≤ w < 2, 0≤ z < 3, und wobei w, x, y, z so gewählt werden, dass gilt 1 + 2w + x - y + z ≥ 0 und 2 - w - x - y ≥ 0.

NaSICON hat erfindungsgemäß noch bevorzugter eine Struktur der Formel Na_{(1 + v)}Zr₂SiᵥP_{(3 - v)}O₁₂, wobei v eine reelle Zahl ist, für die 0 ≤ v ≤ 3 gilt. Am bevorzugtesten gilt v = 2.4

Die Kathodenkammer **K_{K}** <102> umfasst auch einen Zulauf **Z_{KK}** <107> und einen Ablauf **A_{KK}** <109>, der es ermöglicht, in die Kathodenkammer **K_{K}** <102> Flüssigkeit, wie zum Beispiel die Lösung **L₂** <113>, zuzufügen und darin befindliche Flüssigkeit, wie zum Beispiel die Lösung **L₁** <115>, zu entfernen. Der Zulauf **Z_{KK}** <107> und der Ablauf **A_{KK}** <109> sind dabei so an der Kathodenkammer **K_{K}** <102> angebracht, dass die Flüssigkeit beim Durchströmen der Kathodenkammer **K_{K}** <102> die kathodische Elektrode **E_{K}** <105> kontaktiert. Dies ist die Voraussetzung dafür, dass bei der Durchführung des erfindungsgemäßen Verfahrens gemäß dem zweiten Aspekt der Erfindung am Ablauf **A_{KK}** <109> die Lösung **L₁** <115> erhalten wird, wenn die Lösung **L₂** <113> eines Alkalialkoholats XOR im Alkohol ROH durch **K_{K}** <102> geleitet wird.

Die Anodenkammer **K_{A}** <101 > umfasst auch einen Ablauf **A_{KA}** <106>, der es ermöglicht, in der Anodenkammer **K_{A}** <101 > befindliche Flüssigkeit, beispielsweise die wässrige Lösung **L₄** <116> zu entfernen. Daneben umfasst die Mittelkammer **K_{M}** <103> einen Zulauf **Z_{KM}** <108>, während **K_{A}** <101> und **K_{M}** <103> durch eine Verbindung **V_{AM}** <112> miteinander verbunden sind, durch welche Flüssigkeit aus **K_{M}** <103> in **K_{A}** <101 > geleitet werden kann. Dadurch kann über den Zulauf **Z_{KM}** <108> zu **K_{M}** <103> eine Lösung **L₃** <114> gegeben und diese durch **K_{M}** <103> geleitet werden, dann über **V_{AM}** <112> in die Anodenkammer **K_{A}** <101 >, und schließlich durch die Anodenkammer **K_{A}** <101 > geleitet werden. **V_{AM}** <112> und der Ablauf **A_{KA}** <106> sind dabei so an der Anodenkammer **K_{A}** <101 > angebracht, dass die Lösung **L₃** <114> beim Durchströmen der Anodenkammer **K_{A}** <101 > die anodische Elektrode **E_{A}** <104> kontaktiert. Dies ist die Voraussetzung dafür, dass bei der Durchführung des erfindungsgemäßen Verfahrens gemäß dem zweiten Aspekt der Erfindung am Ablauf **A_{KA}** <106> die wässrige Lösung **L₄** <116> erhalten wird, wenn die Lösung **L₃** <114> zuerst durch **K_{M}** <103>, dann **V_{AM}** <112>, dann **K_{A}** <101 > geleitet wird.

Die Zuläufe **Z_{KK}** <107>, **Z_{KM}** <108>, **Z_{KA}** <119> und Abläufe **A_{KK}** <109>, **A_{KA}** <106>, **A_{KM}** <118> können nach dem Fachmann bekannten Verfahren an der Elektrolysezelle **E** <100> angebracht werden.

Die Verbindung **V_{AM}** <112> kann innerhalb der Elektrolysezelle **E** <100> und/oder außerhalb der Elektrolysezelle **E** <100> ausgebildet sein.

Ist die Verbindung **V_{AM}** <112> innerhalb der Elektrolysezelle **E** <100> ausgebildet, wird sie bevorzugt durch mindestens eine Perforation in der Diffusionsbarriere **D** <110> gebildet.

Ist die Verbindung **V_{AM}** <112> außerhalb der Elektrolysezelle **E** <100> ausgebildet, wird sie bevorzugt durch eine außerhalb der Elektrolysezelle **E** <100> verlaufende Verbindung von **K_{M}** <103> und **K_{A}** <101 > gebildet, insbesondere dadurch, dass in der Mittelkammer **K_{M}** <103> ein Ablauf **A_{KM}** <118> durch die Außenwand **W_{A}** <117>, bevorzugt am Boden der Mittelkammer **K_{M}** <103>, wobei noch bevorzugter der Zulauf **Z_{KM}** <108> an der Oberseite der Mittelkammer **K_{M}** <103> ist, gebildet wird, und in der Anodenkammer **K_{A}** <101 > ein Zulauf **Z_{KA}** <119> durch die Außenwand **W_{A}** <117>, bevorzugt am Boden der Anodenkammer **K_{A}** <101>, gebildet wird, und diese durch eine Leitung, beispielsweise ein Rohr oder ein Schlauch, der bevorzugt ein Material ausgewählt aus Gummi, Kunststoff umfasst, verbunden sind. Der Ablauf **A_{KA}** <106> ist dann noch bevorzugter an der Oberseite der Anodenkammer **K_{A}** <101 >.

"Ablauf **A_{KM}** <118> am Boden der Mittelkammer **K_{M}** <103>" bedeutet, dass der Ablauf **A_{KM}** <118> so an der Elektrolysezelle **E** <100> angebracht ist, dass die Lösung **L₃** <114> die Mittelkammer **K_{M}** <103> gleichgerichtet mit der Schwerkraft verlässt.

"Zulauf **Z_{KA}** <119> am Boden der Anodenkammer **K_{A}** <101>" bedeutet, dass der Zulauf **Z_{KA}** <119> so an der Elektrolysezelle **E** <100> angebracht ist, dass die Lösung **L₃** <114> in die Anodenkammer **K_{A}** <101 > entgegen der Schwerkraft eintritt.

"Zulauf **Z_{KM}** <108> an der Oberseite der Mittelkammer **K_{M}** <103>" bedeutet, dass der Zulauf **Z_{KM}** <108> so an der Elektrolysezelle **E** <100> angebracht ist, dass die Lösung **L₃** <114> in die Mittelkammer **K_{M}** <103> gleichgerichtet mit der Schwerkraft eintritt.

"Ablauf **A_{KA}** <106> an der Oberseite der Anodenkammer **K_{A}** <101>" bedeutet, dass der Ablauf **A_{KA}** <106> so an der Elektrolysezelle **E** <100> angebracht ist, dass die Lösung **L₄** <116> die Anodenkammer **K_{A}** <101 > entgegen der Schwerkraft verlässt.

Diese Ausführungsform ist dabei besonders vorteilhaft und deshalb bevorzugt, wenn der Ablauf **A_{KM}** <118> durch die Außenwand **W_{A}** <117> am Boden der Mittelkammer **K_{M}** <103>, und der Zulauf **Z_{KA}** <119> durch die Außenwand **W_{A}** <117> am Boden der Anodenkammer **K_{A}** <101>, gebildet wird. Durch diese Anordnung ist es besonders einfach möglich, in der Anodenkammer **K_{A}** gebildete Gase mit **L₄** <116> aus der Anodenkammer **K_{A}** <101 > abzuleiten, um diese dann weiter abzutrennen.

Wenn die Verbindung **V_{AM}** <112> außerhalb der Elektrolysezelle **E** <100> ausgebildet ist, sind insbesondere **Z_{KM}** <108> und **A_{KM}** <118> an gegenüberliegenden Seiten der Außenwand **W_{A}** <117> der Mittelkammer **K_{M}** <103> angeordnet (also z.B. **Z_{KM}** <108> am Boden und **A_{KM}** <118> an der Oberseite der Elektrolysezelle **E** <100> oder umgekehrt) und **Z_{KA}** <119> und **A_{KA}** <106> an gegenüberliegenden Seiten der Außenwand **W_{A}** <117> der Anodenkammer **K_{A}** <101 > angeordnet (also **Z_{KA}** <119> am Boden und **A_{KA}** <106> an der Oberseite der Elektrolysezelle **E** <100> oder umgekehrt), wie es insbesondere in Abbildung 1 gezeigt ist. Durch diese Geometrie muss **L₃** <114> die beiden Kammern **K_{M}** <103> und **K_{A}** <101 > durchströmen. Dabei können **Z_{KA}** <119> und **Z_{KM}** <108> an derselben Seite der Elektrolysezelle **E** <100> ausgebildet sein, wobei dann automatisch auch **A_{KM}** <118> und **A_{KA}** <106> an derselben Seite der Elektrolysezelle **E** <100> ausgebildet sind. Alternativ können wie in Abbildung 1 gezeigt, **Z_{KA}** <119> und **Z_{KM}** <108> an gegenüberliegenden Seiten der Elektrolysezelle **E** <100> ausgebildet sein, wobei dann automatisch auch **A_{KM}** <118> und **A_{KA}** <106> an gegenüberliegenden Seiten der Elektrolysezelle **E** <100> ausgebildet sind.

Wenn die Verbindung **V_{AM}** <112> innerhalb der Elektrolysezelle **E** <100> ausgebildet ist, kann dies insbesondere dadurch gewährleistet werden, dass eine Seite ("Seite A") der Elektrolysezelle **E** <100>, bei der es sich um die Oberseite oder den Boden der Elektrolysezelle **E** <100> handelt, bevorzugt wie in Abbildung 2 gezeigt um die Oberseite handelt, den Zulauf **Z_{KM}** <108> und den Ablauf **A_{KA}** <106> umfasst und die Diffusionsbarriere **D** <110> ausgehend von dieser Seite ("Seite A") sich in die Elektrolysezelle **E** <100> erstreckt, aber nicht ganz bis zur der der Seite A gegenüberliegenden Seite ("Seite B") der Elektrolysezelle **E** <100>, bei der es dann sich um den Boden bzw. die Oberseite der Elektrolysezelle **E** <100> handelt, reicht und dabei 50 % oder mehr der Höhe der Dreikammerzelle **E** <100>, bevorzugter 60 % bis 99 % der Höhe der Dreikammerzelle **E** <100>, noch bevorzugter 70 % bis 95 % der Höhe der Dreikammerzelle **E** <100>, noch mehr bevorzugter 80 % bis 90 % der Höhe der Dreikammerzelle **E** <100>, noch viel mehr bevorzugter 85 % der Höhe der Dreikammerzelle **E** <100> durchspannt. Dadurch dass die Diffusionsbarriere **D** <110> die Seite B der Dreikammerzelle **E** <100> nicht berührt, entsteht so ein Spalt zwischen Diffusionsbarriere **D** <110> und der Außenwand **W_{A}** <117> der Seite B der Dreikammerzelle **E** <100>. Der Spalt ist dann die Verbindung **V_{AM}** <112>. Durch diese Geometrie muss **L₃** <114> die beiden Kammern **K_{M}** <103> und **K_{A}** <101 > vollständig durchströmen.

Diese Ausführungsformen gewährleisten am besten, dass am säureempfindlichen Festelektrolyten die wässrige Salzlösung **L₃** <114> vorbeiströmt, bevor diese mit der anodischen Elektrode **E_{A}** <104> in Kontakt kommt, wodurch es zur Bildung von Säuren kommt.

"Boden der Elektrolysezelle **E** <100>" ist erfindungsgemäß die Seite der Elektrolysezelle **E** <100>, durch die eine Lösung (z.B. **L₃** <114> bei **A_{KM}** <118> in Abbildung 1) gleichgerichtet mit der Schwerkraft aus der Elektrolysezelle **E** austritt bzw. die Seite der Elektrolysezelle **E,** durch die eine Lösung (z.B. **L₂** <113> bei **Z_{KK}** <107> in Abbildungen 1 und 2 und **L₃** <114> bei **A_{KA}** <119> in Abbildung 1) der Elektrolysezelle **E** entgegen der Schwerkraft zugeführt wird.

"Oberseite der Elektrolysezelle **E**" ist erfindungsgemäß die Seite der Elektrolysezelle **E,** durch die eine Lösung (z.B. **L₄** <116> bei **A_{KA}** <106> und **L₁** <115> bei **A_{KK}** <109> in Abbildungen 1 und 2) entgegen der Schwerkraft aus der Elektrolysezelle **E** austritt bzw. die Seite der Elektrolysezelle **E,** durch die eine Lösung (z.B. **L₃** <114> bei **Z_{KM}** <108> in Abbildungen 1 und 2) der Elektrolysezelle **E** gleichgerichtet mit der Schwerkraft zugeführt wird.

Die Mittelkammer **K_{M}** umfasst erfindungsgemäß eine kathodische Elektrode **E_{M}** <120>. Als solche kathodische Elektrode **E_{M}** <120> kommt jede dem Fachmann geläufige Elektrode in Frage, die unter den Bedingungen stabil ist. Solche sind insbesondere in WO 2014/008410 A1, Absatz [025] oder DE 10360758 A1, Absatz [030] beschrieben. Diese Elektrode **E_{M}** <120> kann aus der Gruppe bestehend aus Maschenwolle, dreidimensionale Matrixstruktur oder "Kugeln" ausgewählt sein. Die kathodische Elektrode **E_{M}** <120> umfasst insbesondere ein Material, welches ausgewählt ist aus der Gruppe bestehend aus Stahl, Nickel, Kupfer, Platin, platinierte Metalle, Palladium, auf Kohle geträgertes Palladium, Titan. Bevorzugt umfasst **E_{M}** <120> Platin.

Die kathodische Elektrode **E_{M}** <120> kann lose in der Mittelkammer **K_{M}** <103> hängen, wie in Abbildung 1 gezeigt.

Alternativ und bevorzugt kann die kathodische Elektrode **E_{M}** <120> auch befestigt sein, zum Beispiel am Festelektrolyten **F_{K}** <111>, an der Diffusionsbarriere **D** <110> oder an der die Innenseite der Mittelkammer **K_{M}** <103> begrenzenden Außenwand <117>. Die Befestigung kann durch dem Fachmann bekannte Verfahren erfolgen, z.B. durch Festschrauben, Klemmen, Kleben (Kunststoffkleber, PVC-Kleber).

Am bevorzugtesten kontaktiert die kathodische Elektrode **E_{M}** <120> den Festelektrolyten **F_{K}** <111>. Dies gewährleistet eine besonders gute Neutralisierung des sauren pH-Werts in der unmittelbaren Umgebung des Festelektrolyten **F_{K}** <111>. Dies kann beispielsweise dadurch gewährleistet werden, dass die kathodische Elektrode **E_{M}** am Festelektrolyten **F_{K}** <111> befestigt ist.

Die kathodische Elektrode **E_{M}** <120> in der Mittelkammer **K_{M}** <103> erzeugt bei der Durchführung der Elektrolyse im Verfahren nach dem zweiten Aspekt der Erfindung Hydroxidionen im die Mittelkammer **K_{M}** <103> während des erfindungsgemäßen Verfahrens durchströmenden Elektrolyten L₃ <114>. Dadurch wird der Aufbau eines pH-Gradienten während der Elektrolyse verlangsamt oder ganz verhindert, was den säureempfindlichen Festelektrolyten **F_{K}** <111 > schont und so eine längere Laufzeit der Elektrolyse ermöglicht bzw. die Lebenszeit der Elektrolysezelle verlängert.

Es versteht sich von selbst, dass die kathodische Elektrode **E_{M}** <120> so in der Mittelkammer **K_{M}** <103> angebracht wird, dass sie den Durchfluss des Elektrolyten **L₃** <114> durch die Mittelkammer **K_{M}** <103> und die Anodenkammer **K_{A}** <101 > in ausreichendem Maße ermöglicht bzw. nicht vollständig blockiert. Genauso versteht es sich von selbst, dass die kathodische Elektrode **E_{M}** in der bevorzugten Ausführungsform, in der sie den Festelektrolyten **F_{K}** <111 > kontaktiert, diesen nicht vollständig vom Elektrolyten **L₃** <114> abschirmt, so dass die lonenwanderung während der Elektrolyse gewährleistet ist.

In einer bevorzugten Ausführungsform der Elektrolysezelle **E** <100> gemäß dem ersten Aspekt der Erfindung kann die Anodenkammer **K_{A}** <101 > eine zweite anodische Elektrode **E_{A2}** umfassen, mit der die Spannung zwischen **E_{A2}** und der kathodischen Elektrode **E_{M}** <120> zusätzlich gesteuert werden kann. Damit kann noch besser auf pH-Schwankungen in der Mittelkammer **K_{M}** <103> reagiert werden, in dem, abhängig vom pH-Wert im Elektrolyten in der Mittelkammer **K_{M}** <103>, die Erzeugung von Hydroxidionen mit der kathodischen Elektrode **E_{M}** geregelt werden kann.

### 4.2 Erfindungsgemäße Verfahrensschritte

Das Verfahren gemäß dem zweiten Aspekt der Erfindung ist eines zur Herstellung einer Lösung **L₁** <115> eines Alkalimetallalkoholats XOR im Alkohol ROH in einer Elektrolysezelle **E** <100> gemäß dem ersten Aspekt der Erfindung.

Das Verfahren gemäß dem zweiten Aspekt der Erfindung umfasst die folgenden Schritte (a), (b) und (c), welche gleichzeitig ablaufen.

Im Schritt (a) wird eine Lösung **L₂** <113> umfassend den Alkohol ROH, bevorzugt umfassend ein Alkalialkoholat XOR und Alkohol ROH, durch **K_{K}** <102> geleitet. X ist ein Alkalimetallkation und R ein Alkylrest mit 1 bis 4 Kohlenstoffatomen.

Bevorzugt ist X aus der Gruppe bestehend aus Li⁺, K⁺, Na⁺, bevorzugter aus der Gruppe bestehend aus K⁺, Na⁺ ausgewählt. Am bevorzugtesten ist X = Na⁺.

R ist bevorzugt aus der Gruppe bestehend aus n-Propyl, iso-Propyl, Ethyl, Methyl ausgewählt, bevorzugter aus der Gruppe bestehend aus Ethyl, Methyl ausgewählt. Am bevorzugtesten ist R Methyl.

Die Lösung **L₂** <113> ist bevorzugt frei von Wasser. "Frei von Wasser" bedeutet erfindungsgemäß, dass das Gewicht des Wassers in der Lösung **L₂** <113> bezogen auf das Gewichts des Alkohols ROH in der Lösung **L₂** <113> (Massenverhältnis) ≤ 1 : 10, bevorzugter ≤ 1 : 20, noch bevorzugter ≤ 1 : 100, noch bevorzugter ≤ 0.5 : 100 ist.

Umfasst die Lösung **L₂** <113> XOR, so liegt der Massenanteil von XOR in der Lösung **L₂** <113>, bezogen auf die gesamte Lösung **L₂** <113>, insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung **L₂** <113> XOR, so liegt in der Lösung **L₂** <113> insbesondere das Massenverhältnis von XOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

In Schritt (b) wird eine neutrale oder alkalische, wässrige Lösung **L₃** <114> eines Salzes **S** umfassend X als Kation durch **K_{M}** <103>, dann über **V_{AM}** <112>, dann durch **K_{A}** <101 > geleitet.

Das Salz **S** ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Der pH der wässrigen Lösung **L₃** <114> ist dabei ≥ 7.0, bevorzugt im Bereich 7 bis 12, bevorzugter im Bereich 8 bis 11, noch bevorzugter 10 bis 11, am bevorzugtesten bei 10.5.

Der Massenanteil des Salzes **S** in der Lösung **L₃** <113> liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung **L₃** <113>.

Im Schritt (c) wird dann eine Spannung zwischen der anodischen Elektrode **E_{A}** <104> und den beiden kathodischen Elektroden **E_{K}** <105> und **E_{M}** <120> angelegt.

Dadurch kommt es zu einem Stromtransport von der Ladungsquelle zur Anode, zu einem Ladungstransport über Ionen zur jeweiligen Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies hat wiederum folgende Konsequenzen:
Am Ablauf **A_{KK}** <109> wird die Lösung **L₁** <115> erhalten, wobei die Konzentration von XOR in **L₁** <115> höher ist als in **L₂** <113>.

Am Ablauf **A_{KA}** <106> wird eine wässrige Lösung **L₄** <116> von **S** erhalten, wobei die Konzentration von **S** in **L₄** <116> geringer ist als in **L₃** <114>.

An der kathodischen Elektrode **E_{M}** <120> werden im Elektrolyten **L₃** <114> in der Mittelkammer **K_{M}** <103> Hydroxidionen (OH⁻) gebildet.

Im Verfahren gemäß dem zweiten Aspekt der Erfindung wird insbesondere eine solche Spannung angelegt, dass so ein Strom fließt, so dass die Stromdichte (= Verhältnis des Stroms, der zur Elektrolysezelle fließt, zur Fläche des Festelektrolyten, die den in der Mittelkammer **K_{M}** <103> befindlichen Anolyten kontaktiert) im Bereich von 10 bis 8000 A/ m² liegt, bevorzugter im Bereich von 100 bis 2000 A/ m² liegt, noch bevorzugter im Bereich von 300 bis 800 A/ m², noch bevorzugter bei 494 A/ m² liegt. Dies kann vom Fachmann standardmäßig bestimmt werden. Die Fläche des Festelektrolyten, die den in der Mittelkammer **K_{M}** <103> befindlichen Anolyten kontaktiert, beträgt insbesondere 0.00001 bis 10 m², bevorzugt 0.0001 bis 2.5 m², bevorzugter 0.0002 bis 0.15 m², noch bevorzugter 2.83 cm².

Es versteht sich von selbst, dass der Schritt (c) des Verfahrens gemäß dem zweiten Aspekt der Erfindung dann durchgeführt wird, wenn beide Kammern **K_{M}** <103> und **K_{A}** <101 > mindestens teilweise mit **L₃** <114> beladen sind und **K_{K}** <102> mit **L₂** <113> mindestens teilweise beladen ist.

Die Tatsache, dass in Schritt (c) ein Ladungstransport zwischen **E_{A}** <104> und **E_{K}** <105> bzw. **E_{M}** <120> stattfindet, impliziert, dass **K_{K}** <102>, **K_{M}** <103> und **K_{A}** <101 > gleichzeitig mit **L₂** <113> bzw. **L₃** <114> so beladen sind, dass sie die Elektroden **E_{A}** <104>, **E_{K}** <105> und **E_{M}** <120> soweit bedecken, dass der Stromkreislauf geschlossen ist.

Das ist insbesondere dann der Fall, wenn kontinuierlich ein Flüssigkeitsstrom von **L₃** <114> durch **K_{M}** <103>, **V_{AM}** <112> und **K_{A}** <101 > und ein Flüssigkeitsstrom von **L₂** <113> durch **K_{K}** <102> geleitet wird und der Flüssigkeitsstrom von **L₃** <114> die Elektroden **E_{A}** <104>, **E_{M}** <120> und der Flüssigkeitsstrom von **L₂** <113> die Elektrode **E_{K}** <105> mindestens teilweise, bevorzugt vollständig bedeckt.

Dadurch, dass während des Verfahrens gemäß dem zweiten Aspekt der Erfindung an der kathodischen Elektrode **E_{M}** <120> im Elektrolyten **L₃** <114> in der Mittelkammer **K_{M}** <103> Hydroxidionen gebildet werden, kommt es in dieser Kammer nicht zur Ausbildung eines typischen pH-Gradienten, wodurch sich insbesondere die Langzeitstabilität des Festelektrolyten **F_{K}** <111> erhöht. Dieser Effekt ist noch stärker, wenn die kathodische Elektrode **E_{M}** <120> den Festelektrolyten **F_{K}** <111> kontaktiert, da die neutralisierenden Hydroxidionen dann direkt an der Oberfläche des Festelektrolyten **F_{K}** <111 > gebildet werden.

In einer weiteren bevorzugten Ausführungsform wird das Verfahren gemäß dem zweiten Aspekt der Erfindung kontinuierlich durchgeführt, also Schritt (a) und Schritt (b) kontinuierlich durchgeführt und dabei gemäß Schritt (c) Spannung angelegt.

Nach Durchführung des Schrittes (c) wird am Ablauf **A_{KK}** <109> die Lösung **L₁** <115> erhalten, wobei die Konzentration von XOR in **L₁** <115> höher ist als in **L₂** <113>. Wenn **L₂** <113> schon XOR umfasste, ist die Konzentration von XOR in **L₁** <115> bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in **L₂** <113>, am bevorzugtesten um das 1.077-fache höher als in **L₂** <113>, wobei noch bevorzugter dabei der Massenanteil von XOR in **L₁** <115> und in **L₂** <113> im Bereich 10 bis 20 Gew.-%, noch mehr bevorzugter 13 bis 14 Gew.-% liegt.

Am Ablauf **A_{KA}** <106> wird eine wässrige Lösung **L₄** <116> von **S** erhalten wird, wobei die Konzentration von **S** in **L₄** <116> geringer ist als in **L₃** <114>.

Die Konzentration des Kations X in der wässrigen Lösung **L₃** <114> liegt bevorzugt im Bereich 3.5 bis 5 mol/l, bevorzugter 4 mol/l. Die Konzentration des Kations X in der wässrigen Lösung **L₄** <116> ist bevorzugter 0.5 mol/l geringer als jene der jeweils eingesetzten wässrigen Lösung **L₃** <114>.

Insbesondere wird das Verfahren gemäß dem zweiten Aspekt der Erfindung bei einer Temperatur von 20 °C bis 70 °C, bevorzugt 35 °C bis 65 °C, bevorzugter 35 °C bis 60 °C, noch bevorzugter 35 °C bis 50 °C und einem Druck von 0.5 bar bis 1.5 bar, bevorzugt 0.9 bar bis 1.1 bar, bevorzugter 1.0 bar durchgeführt.

Bei der Durchführung des erfindungsgemäßen Verfahrens entsteht in der Kathodenkammer **K_{K}** <102> typischerweise Wasserstoff, der über den Ablauf **A_{KK}** <109> aus der Zelle zusammen mit der Lösung **L₁** <115> abgeführt werden kann. Die Mischung aus Wasserstoff und Lösung L₁ <115> kann dann in einer besonderen Ausführungsform der vorliegenden Erfindung nach dem Fachmann bekannten Verfahren aufgetrennt werden. In der Anodenkammer **K_{A}** <101>, wenn es sich bei der eingesetzten Alkalimetallverbindung um ein Halogenid, insbesondere Chlorid handelt, kann Chlor oder ein anderes Halogengas entstehen, welches über den Ablauf **A_{KK}** <106> aus der Zelle zusammen mit der Lösung **L₄** <116> abgeführt werden kann. Daneben kann auch Sauerstoff oder/und Kohlendioxid entstehen, was ebenso abgeführt werden kann. Die Mischung aus Chlor, Sauerstoff und/oder CO₂ und Lösung **L₄** <116> kann dann in einer besonderen Ausführungsform der vorliegenden Erfindung nach dem Fachmann bekannten Verfahren aufgetrennt werden. Genauso kann dann nach Abtrennung der Gase Chlor, Sauerstoff und/oder CO₂ von der Lösung **L₄** <116> diese nach dem Fachmann bekannten Verfahren voneinander abgetrennt werden. Der durch die Wasserreduktion an der kathodischen Elektrode **E_{M}** <120> in der Mittelkammer **K_{M}** <103> entstehende Wasserstoff kann über einen Gasauslass in der Mittelkammer **K_{M}** <103> aus dieser abgeleitet werden.

Diese Ergebnisse waren überraschend und im Lichte des Standes der Technik nicht zu erwarten. Durch das erfindungsgemäße Verfahren wird der säurelabile Festelektrolyt vor Korrosion geschützt, ohne dass dabei wie im Stand der Technik Alkoholatlösung aus dem Kathodenraum als Pufferlösung geopfert werden muss. Damit ist das erfindungsgemäße Verfahren effizienter als die in WO 2008/076327 A1 beschriebene Vorgehensweise, in der die Produktlösung für die Mittelkammer verwendet wird, was den Gesamtumsatz schmälert. Zusätzlich wird der säurelabile Festelektrolyt dadurch stabilisiert, dass die Ausbildung eines pH-Gradienten aufgrund der Bildung von Hydroxidionen und dadurch lokaler Generierung eines alkalischen Milieus verhindert wird.

### Beispiele

### Vergleichsbeispiel 1

Natriummethylat (NM) wurde über einen kathodischen Prozess hergestellt, wobei in der Anodenkammer 20 Gew.-%-ige NaCl-Lösung (in Wasser) und in der Kathodenkammer 10 Gew.-%-ige methanolische NM-Lösung zugeführt werden. Dabei bestand die Elektrolysezelle aus drei Kammern, welcher jenen in Abbildung 1 gezeigten entsprach, außer dass die Elektrolysezelle keine kathodische Elektrode **E_{M}** <120> in der Mittelkammer aufwies. Die Verbindung zwischen Mittel- und Anodenkammer wurde durch einen Schlauch, der am Boden der Elektrolysezelle angebracht war, hergestellt. Die Anodenkammer und mittlere Kammer waren durch eine 2.83 cm² Anionenaustauschermembran (Tokuyama AMX, Ammoniumgruppen auf Polymer) getrennt. Kathoden und Mittelkammer waren durch eine Keramik vom Typ NaSICON mit einer Fläche von 2.83 cm² getrennt. Die Keramik hatte eine chemische Zusammensetzung der Formel Na_{3.4}Zr_{2.0}Si_{2.4}P_{0.6}O₁₂.

Der Anolyt wurde durch die mittlere Kammer in die Anodenkammer überführt. Die Durchflussrate des Anolyten betrug 1 l/h, jene des Katholyten betrug 90 ml/h, und es wurde ein Strom von 0.14 A angelegt. Die Temperatur betrug 35 °C. Die Elektrolyse wurde für 500 Stunden durchgeführt, wobei die Spannung konstant bei 5 V verblieb.

Es wurde beobachtet, dass sich in der Mittelkammer über längere Zeit ein pH-Gradient ausbildete, was auf die Wanderung der Ionen zu den Elektroden im Zuge der Elektrolyse und die Ausbreitung der an der Anode in Folgereaktionen gebildeten Protonen zurückzuführen ist. Diese lokale Erhöhung des pH-Wertes ist unerwünscht, da er den Festelektrolyten angreifen kann und gerade bei sehr langen Laufzeiten zur Korrosion und Bruch des Festelektrolyten führen kann.

### Vergleichsbeispiel 2

Das Vergleichsbeispiel 1 wurde mit einer Zweikammerzelle umfassend nur eine Anoden- und eine Kathodenkammer, wobei die Anodenkammer durch die Keramik vom Typ NaSICON von der Kathodenkammer getrennt war, wiederholt. Somit enthielt diese Elektrolysezelle keine Mittelkammer. Dies schlägt sich in einer noch schnelleren Korrosion der Keramik im Vergleich zum Vergleichsbeispiel 1 nieder, was zu einem schnellen Anstieg der Spannungskurve führt. Bei einem Startwert der Spannung von < 5 V steigt diese innerhalb von 100 Stunden auf > 20 V.

### Erfinderisches Beispiel 1

Vergleichsbeispiel 1 wird wiederholt, wobei in die Mittelkammer eine kathodische Elektrode **E_{M}** <120> umfasst. Bei der Elektrolyse entstehen bei der Reduktion von Wasser an der eine kathodische Elektrode **E_{M}** Hydroxidionen, die der Versauerung des Elektrolyten in der Mittelkammer entgegenwirken. Dadurch wird der Aufbau eines pH-Gradienten während der Elektrolyse erschwert.

### Erfinderisches Beispiel 2

Vergleichsbeispiel 1 wird wiederholt, wobei die kathodische Elektrode **E_{M}** in mehreren Abschnitten <121>, <122>, <123> auf der NaSICON-Keramik aufgebracht ist. Durch diese Anordnung wird der Aufbau des pH-Gradienten in unmittelbarer Umgebung der Nasicon-Keramik noch effektiver verhindert.

### Ergebnis

Durch die Verwendung einer erfindungsgemäßen Dreikammerzelle im erfindungsgemäßen Verfahren wird die Korrosion des Festelektrolyten verhindert, wobei gleichzeitig kein Alkalialkoholatprodukt für die Mittelkammer geopfert werden muss und die Spannung konstant gehalten wird. Diese Vorteile, die schon aus dem Vergleich der beiden Vergleichsbeispiele 1 und 2 ersichtlich sind, unterstreichen den überraschenden Effekt der vorliegenden Erfindung.

Daneben führt die Abmilderung bzw. Zerstörung des sich mit Fortgang der Elektrolyse aufbauenden pH-Gradienten durch die Generierung von Hydroxidionen im Elektrolyten in der Mittelkammer zu einer Verlängerung der Lebensdauer der Elektrolysekammer. Dieser Gradient kann gerade bei sehr langen Laufzeiten die Elektrolyse weiter erschweren und zur Korrosion und letztendlich Bruch des Festelektrolyten führen. In der Ausführung gemäß erfindungsgemäßem Beispielen 1 und 2 wird dieser pH-Gradient zerstört, was zusätzlich zu den genannten Vorteilen, die eine Dreikammerzelle gegenüber einer Zweikammerzelle erbringt, die Stabilität des Festelektrolyten noch weiter erhöht.

## Patentansprüche

1. Elektrolysezelle **E** <100>, welche mindestens eine Anodenkammer **K_{A}** <101>, mindestens eine Kathodenkammer **K_{K}** <102> und mindestens eine dazwischen liegende Mittelkammer **K_{M}** <103> umfasst,
wobei **K_{A}** <101 > eine anodische Elektrode **E_{A}** <104> und einen Ablauf **A_{KA}** <106> umfasst,
wobei **K_{K}** <102> eine kathodische Elektrode **E_{K}** <105>, einen Zulauf **Z_{KK}** <107> und einen Ablauf **A_{KK}** <109> umfasst,
wobei **K_{M}** <103> einen Zulauf **Z_{KM}** <108> umfasst, durch eine Diffusionsbarriere **D** <110> von **K_{A}** <101 > abgetrennt ist und durch einen alkalikationenleitenden Festelektrolyten **F_{K}** <111> von **K_{K}** <102> abgetrennt ist,
wobei **K_{M}** <103> und **K_{A}** <101 > durch eine Verbindung **V_{AM}** <112> miteinander verbunden sind, durch welche Flüssigkeit aus **K_{M}** <103> in **K_{A}** <101 > geleitet werden kann,
**dadurch gekennzeichnet, dass** die Mittelkammer **K_{M}** <103> eine kathodische Elektrode E_{M} <120> umfasst.

2. Elektrolysezelle E <100> nach Anspruch 1, wobei der alkaliionenleitende Festelektrolyt **F_{K}** <111> eine Struktur der Formel M^{I}_{1+2w+x-y+z} M^{II}_{w} M^{III}ₓ Zr^{IV}_{2-w-x-y} M^{V}_{y} (SiO₄)_{z} (PO₄)_{3-z} aufweist,
wobei M^{I} ausgewählt aus Na⁺, Li⁺ ist,
M^{II} ein zweiwertiges Metallkation ist,
M^{III} ein dreiwertiges Metallkation ist,
M^{V} ein fünfwertiges Metallkation ist,
die römischen Indizes I, II, III, IV, V die Oxidationszahlen angeben, in der die jeweiligen Metallkationen vorliegen,
und w, x, y, z reelle Zahlen sind, wobei gilt, dass 0 ≤ x < 2, 0≤ y < 2, 0≤ w < 2, 0≤ z < 3,
und wobei w, x, y, z so gewählt werden, dass 1 + 2w + x - y + z ≥ 0 und 2 - w - x - y ≥ 0 gilt.

3. Elektrolysezelle **E** <100> nach Anspruch 1 oder 2, wobei die kathodische Elektrode **E_{M}** <120> den alkaliionenleitenden Festelektrolyten **F_{K}** <111> kontaktiert.

4. Elektrolysezelle **E** <100> nach einem der Ansprüche 1 bis 3, wobei die Verbindung **V_{AM}** <112> innerhalb der Elektrolysezelle **E** <100> ausgebildet ist.

5. Elektrolysezelle **E** <100> nach einem der Ansprüche 1 bis 3, wobei die Verbindung **V_{AM}** <112> außerhalb der Elektrolysezelle **E** <100> ausgebildet ist.

6. Elektrolysezelle **E** <100> nach einem der Ansprüche 1 bis 3, wobei die Verbindung **V_{AM}** <112> innerhalb und außerhalb der Elektrolysezelle **E** <100> ausgebildet ist.

7. Verfahren zur Herstellung einer Lösung **L₁** <115> eines Alkalimetallalkoholats XOR im Alkohol ROH in einer Elektrolysezelle **E** <100> nach einem der Ansprüche 1 bis 4,
wobei das Verfahren die folgenden, gleichzeitig ablaufenden Schritte (a), (b) und (c) umfasst:
(a) eine Lösung **L₂** <113> umfassend den Alkohol ROH wird durch **K_{K}** <102> geleitet,
(b) eine neutrale oder alkalische, wässrige Lösung L₃ <114> eines Salzes **S** umfassend X als Kation wird durch **K_{M}** <103>, dann **über V_{AM}** <112>, dann durch **K_{A}** <101> geleitet,
(c) zwischen **E_{A}** <104> und den beiden kathodischen Elektroden **E_{K}** <105> und **E_{M}** <120> wird Spannung angelegt,
wodurch am Ablauf **A_{KK}** <109> die Lösung **L₁** <115> erhalten wird, wobei die Konzentration von XOR in **L₁** <115> höher ist als in **L₂** <113>,
und wodurch am Ablauf **A_{KA}** <106> eine wässrige Lösung **L₄** <116> von **S** erhalten wird, wobei die Konzentration von **S** in **L₄** <116> geringer ist als in **L₃** <114>,
und wodurch an der kathodischen Elektrode **E_{M}** <120> im Elektrolyten L₃ <114> in der Mittelkammer **K_{M}** <103> Hydroxidionen gebildet werden,
wobei X ein Alkalimetallkation ist und Rein Alkylrest mit 1 bis 4 Kohlenstoffatomen ist.

8. Verfahren nach Anspruch 7, wobei X aus der Gruppe bestehend aus Li⁺, Na⁺, K⁺ ausgewählt ist.

9. Verfahren nach Anspruch 7 oder 8, wobei S ein Halogenid, Sulfat, Sulfit, Nitrat, Hydrogencarbonat oder Carbonat von X ist.

10. Verfahren nach einem der Ansprüche 7 bis 9, wobei R aus der Gruppe bestehend aus Methyl, Ethyl ausgewählt ist.

11. Verfahren nach einem der Ansprüche 7 bis 10, wobei **L₂** <113> den Alkohol ROH und ein Alkalimetallalkoholat XOR umfasst.

12. Verfahren nach Anspruch 11, wobei das Massenverhältnis von XOR zu Alkohol ROH in **L₂** <113> im Bereich 1 : 100 bis 1 : 5 liegt.

13. Verfahren nach Anspruch 11 oder 12, wobei die Konzentration von XOR in **L₁** <115> um das 1.01 bis 2.2-fache höher ist als in **L₂** <113>.

14. Verfahren nach einem der Ansprüche 7 bis 13, welches bei einer Temperatur von 20 bis 70 °C und einem Druck von 0.5 bis 1.5 bar durchgeführt wird.

## Claims

1. Electrolysis cell **E** <100> comprising at least one anode chamber **K_{A}** <101>, at least one cathode chamber **K_{K}** <102> and at least one interposed middle chamber **K_{M}** <103>, wherein **K_{A}.** <101> comprises an anodic electrode **E_{A}** <104> and an outlet **A_{KA}** <106>,
wherein **K_{K}** <102> comprises a cathodic electrode **E_{K}** <105>, an inlet **Z_{KK}** <107> and an outlet **A_{KK}** <109>,
wherein **K_{M}** <103> comprises an inlet **Z_{KM}** <108>, is divided from **K_{A}** <101> by a diffusion barrier **D** <110> and is divided from **K_{K}** <102> by an alkali metal cation-conducting solid-state electrolyte **F_{K}** <111>,
wherein **K_{M}** <103> and **K_{A}** <101> are connected to one another by a connection **V_{AM}** <112> through which liquid can be routed from **K_{M}** <103> into **K_{A}** <101>,
**characterized in that** the middle chamber **K_{M}** <103> comprises a cathodic electrode **E_{M}** <120>.

2. Electrolysis cell **E** <100> according to Claim 1, wherein the alkali metal ion-conducting solid-state electrolyte **F_{K}** <111> has a structure of the formula M^{I}_{1+2w+x-y+z}M^{II}_{w} M^{III}x Zr^{IV}_{2-w-x-y} M^{V}_{y} (SiO₄)_{z} (PO₄)_{3-z} where M^{I} is selected from Na⁺ and Li⁺,
M^{II} is a divalent metal cation,
M^{III} is a trivalent metal cation,
M^{V} is a pentavalent metal cation,
the Roman indices I, II, III, IV, V indicate the oxidation numbers in which the respective metal cations exist, and w, x, y, z are real numbers, where 0 ≤ x < 2, 0 ≤ y < 2, 0 ≤ w < 2, 0 ≤ z < 3, and where w, x, y, z are chosen such that 1 + 2w + x - y + z ≥ 0 and 2 - w - x - y ≥ 0.

3. Electrolysis cell **E** <100> according to Claim 1 or 2, wherein the cathodic electrode **E_{M}** <120> makes contact with the alkali metal ion-conducting solid-state electrolyte **F_{K}** <111>.

4. Electrolysis cell **E** <100> according to any of Claims 1 to 3, wherein the connection **V_{AM}** <112> is formed within the electrolysis cell **E** <100>.

5. Electrolysis cell **E** <100> according to any of Claims 1 to 3, wherein the connection **V_{AM}** <112> is formed outside the electrolysis cell **E** <100>.

6. Electrolysis cell **E** <100> according to any of Claims 1 to 3, wherein the connection **V_{AM}** <112> is formed within and outside the electrolysis cell **E** <100>.

7. Process for producing a solution **L₁** <115> of an alkali metal alkoxide XOR in the alcohol ROH in an electrolysis cell **E** <100> according to any of Claims 1 to 4,
wherein the process comprises the following steps (a), (b) and (c) that proceed simultaneously:
(a) a solution **L₂** <113> comprising the alcohol ROH is routed through **K_{K}** <102>,
(b) a neutral or alkaline, aqueous solution **L₃** <114> of a salt **S** comprising X as cation is routed through **K_{M}** <103>, then via **V_{AM}** <112>, then through **K_{A}** <101>,
(c) voltage is applied between **E_{A}** <104> and the two cathodic electrodes **E_{K}** <105> and **E_{M}** <120>,
which affords the solution **L₁** <115> at the outlet **A_{KK}** <109>, with a higher concentration of XOR in **L₁** <115> than in **L₂** <113>,
and which affords an aqueous solution **L₄** <116> of **S** at the outlet **A_{KA}** <106>, with a lower concentration of **S** in **L₄** <116> than in **L₃** <114>,
and whereby hydroxide ions are formed in the electrolyte **L₃** <114> in the middle chamber **K_{M}** <103> at the cathodic electrode **E_{M}** <120>,
wherein X is an alkali metal cation and R is an alkyl radical having 1 to 4 carbon atoms.

8. Process according to Claim 7, wherein X is selected from the group consisting of Li⁺, Na⁺, K⁺.

9. Process according to Claim 7 or 8, wherein **S** is a halide, sulfate, sulfite, nitrate, hydrogencarbonate or carbonate of X.

10. Process according to any of Claims 7 to 9, wherein R is selected from the group consisting of methyl and ethyl.

11. Process according to any of Claims 7 to 10, wherein **L₂** <113> comprises the alcohol ROH and an alkali metal alkoxide XOR.

12. Process according to Claim 11, wherein the mass ratio of XOR to alcohol ROH in **L₂** <113> is in the range from 1:100 to 1:5.

13. Process according to Claim 11 or 12, wherein the concentration of XOR in **L₁** <115> is 1.01 to 2.2 times higher than in **L₂** <113>.

14. Process according to any of Claims 7 to 13, which is performed at a temperature of 20 to 70°C and a pressure of 0.5 to 1.5 bar.

## Revendications

1. Cellule électrolytique **E** <100>, qui comprend au moins une chambre anodique **K_{A}** <101>, au moins une chambre cathodique **K_{K}** <102> et au moins une chambre médiane **K_{M}** <103> se trouvant entre celles-ci,
**K_{A}.** <101> comprenant une électrode anodique **E_{A}** <104> et une décharge **A_{KA}** <106>,
**K_{K}** <102> comprenant une électrode cathodique **E_{K}** <105>, une alimentation **Z_{KK}** <107> et une décharge **A_{KK}** <109>,
**K_{M}** <103> comprenant une alimentation **Z_{KM}** <108>, étant séparée de **K_{A}**<101> par une barrière de diffusion **D** <110> et de **K_{K}**<102> par un électrolyte solide **F_{K}** <111> conducteur par cations de métaux alcalins,
**K_{M}** <103> et **K_{A}** <101> étant reliées entre elles par un conduit de raccordement **V_{AM}** <112> via lequel du liquide peut être conduit depuis **K_{M}** <103> dans **K_{A}** <101>, **caractérisée en ce que** la chambre médiane **K_{M}** <103> comprend une électrode cathodique **E_{M}** <120>.

2. Cellule électrolytique **E** <100> selon la revendication 1, dans laquelle l'électrolyte solide **F_{K}** <111> conducteur par ions de métaux alcalins présente une structure de formule M^{I}_{1+2w+x-y+z}M^{II}_{w} M^{III}ₓ Zr^{IV}_{2-w-x-y} M^{V}_{y} (SiO₄) _{z} (PO₄)_{3-z},
dans laquelle M^{I} est choisi parmi Na⁺, Li⁺,
M^{II} est un cation métallique divalent,
M^{III} est un cation métallique trivalent,
M^{V} est un cation métallique pentavalent,
les exposants en chiffres romains I, II, III, IV, V indiquent les nombres d'oxydation dans lesquels sont présents les cations métalliques respectifs,
et w, x, y, z sont des nombres réels, étant entendu que 0 ≤ x <2, 0 ≤ y < 2, 0 ≤ w < 2, 0 ≤ z < 3, et w, x, y, z sont choisis de telle façon que 1 + 2w + x - y + z ≥ 0 et 2 - w - x - y ≥ 0.

3. Cellule électrolytique **E** <100> selon la revendication 1 ou 2, dans laquelle l'électrode cathodique **E_{M}** <120> est en contact avec l'électrolyte solide **F_{K}** <111> conducteur par ions de métaux alcalins.

4. Cellule électrolytique **E** <100> selon l'une quelconque des revendications 1 à 3, dans laquelle le conduit de raccordement **V_{AM}** <112> est formé à l'intérieur de la cellule électrolytique **E** <100>.

5. Cellule électrolytique **E** <100> selon l'une quelconque des revendications 1 à 3, dans laquelle le conduit de raccordement **V_{AM}** <112> est formé à l'extérieur de la cellule électrolytique **E** <100>.

6. Cellule électrolytique **E** <100> selon l'une quelconque des revendications 1 à 3, dans laquelle le conduit de raccordement **V_{AM}** <112> est formé à l'intérieur et à l'extérieur de la cellule électrolytique **E** <100>.

7. Procédé pour la préparation d'un solution **L₁** <115> d'un alcoolate de métal alcalin XOR dans l'alcool ROH dans une cellule électrolytique **E** <100> selon l'une quelconque des revendications 1 à 4,
le procédé comprenant les étapes (a), (b) et (c) suivantes, qui se déroulent simultanément :
(a) une solution **L₂** <113> omprenant l'alcool ROH est conduite à travers **K_{K}** <102>,
(b) une solution aqueuse neutre ou alcaline **L**₃ <114> d'un sel **S** comprenant X en tant que cation est conduite à travers **K_{M}** <103>, puis, via **V_{AM}** <112>, ensuite à travers **K_{A}** <101>,
(c) une tension est appliquée entre **E_{A}** <104> et les deux électrodes cathodiques **E_{K}** <105> et **E_{M}** <120>,
de sorte qu'à la décharge **A_{KK}** <109> est obtenue la solution **L₁** <115>, la concentration de XOR dans **L₁** <115> étant plus élevée que dans **L₂** <113>,
et de sorte qu'à la décharge **A_{KA}** <106> est obtenue une solution aqueuse **L₄** <116> de **S** , la concentration de **S** dans **L₄** <116> étant plus faible que dans **L₃** <114>,
et de sorte qu'à l'électrode cathodque **E_{M}** <120> dans l'électrolyte **L₃** <114> dans la chambre médiane Km <103> sont formés des ions hydroxyde,
X étant un cation de métal alcalin et R un radical alkyle ayant de 1 à 4 atomes de carbone.

8. Procédé selon la revendication 7, dans lequel X est choisi dans le groupe constitué par Li⁺, Na⁺, K⁺.

9. Procédé selon la revendication 7 ou 8, dans lequel **S** est un halogénure, sulfate, sulfite, nitrate, hydrogénocarbonate ou carbonate de X.

10. Procédé selon l'une quelconque des revendications 7 à 9, dans lequel R est choisi dans le groupe constitué par méthyle, éthyle.

11. Procédé selon l'une quelconque des revendications 7 à 10, dans lequel **L₂** <113> comprend l'alcool ROH et un alcoolate de métal alcalin XOR.

12. Procédé selon la revendication 11, dans lequel le rapport en masse de XOR à l'alcool ROH dans **L₂** <113> se situe dans la plage de 1 : 100 à 1 : 5.

13. Procédé selon la revendication 11 ou 12, dans lequel la concentration de XOR dans **L₁** <115> est de 1,01 à 2,2 fois plus élevée que dans **L₂** <113>.

14. Procédé selon l'une quelconque des revendications 7 à 13, qui est effectué à une température de 20 à 70 °C et sous une pression de 0,5 à 1,5 bar.
